# EUROPÄISCHE PATENTANMELDUNG

(11) **EP 1 475 562 A1**
(43) Veröffentlichungstag der Anmeldung: **10.11.2004**
(21) Anmeldenummer: 04090185.2
(22) Anmeldetag: 07.05.2004
(51) Int. Cl.: F16L 21/05

(54) **Rohrverbindung**

(30) Priorität: 08.05.2003 DE 10321301
(71) Anmelder: Geberit Mapress GmbH, 40764 Langenfeld (DE)
(72) Erfinder: Sedlak, Bernd, 45478 Mülheim (DE)
(74) Vertreter: Meissner, Peter E., Dipl.-Ing.

(57) **Zusammenfassung**

Die Erfindung betrifft eine Rohrverbindung bestehend aus einem Fitting, der im Einschubbereich mit einem Dichtelement versehen ist und in den ein Leitungsrohr einschiebbar und ohne Verpresswerkzeug abdichtbar und axial sicherbar ist. Dabei ist das einschubseitige Ende des Fittings (1) ausgehend von einem das Leitungsrohr (2) aufnehmenden zylindrischen Abschnitt (10) aufgeweitet, und das im aufgeweiteten Abschnitt (8) angeordnete Dichtelement (3) wird durch eine einen radial nach innen sich erstreckenden Kragen (7) aufweisende und die Innenseite des Dichtelementes abdeckende Mitnahmehülse (6) radial unter Kompression gehalten und beim Einschieben des Leitungsrohres (2) kommt der Kragen (7) der Mitnahmehülse (6) an der Stirnseite des Leitungsrohres (2) zur Anlage und der Einschub in den zylindrischen Abschnitt (10) erfolgt soweit, bis die Mitnahmehülse (6) das Dichtelement (3) freigibt und durch die radiale Ausdehnung das Dichtelement (3) abdichtend auf die Mantelfläche des Leitungsrohres (2) drückt.

## Beschreibung

Die Erfindung betrifft eine Rohrverbindung gemäß dem Oberbegriff des Patentanspruches 1.

Eine Rohrpressverbindung zwischen einem Fitting und einem Metallrohrende wird in der EP 0922896 A1 beschrieben. Zur Erstellung der Rohrverbindung wird hier der Einschiebebereich des Fittings neben dem Dichtelement mit einem Sicherungselement zur axialen Sicherung versehen, das sich bei der radialen Verpressung des Einschiebebereiches mit dem Rohrende in das Material des Metallrohres eingräbt.

Diese nach dem Stand der Technik bekannte Rohrverbindung hat den Nachteil, dass zur Herstellung einer dichten und axial gesicherten Verbindung ein zusätzliches Verpresswerkzeug notwendig ist.

Gattungsgemäße Rohrverbindungen die keine zusätzlichen Verpresswerkzeuge benötigen sind ebenfalls bekannt (US 3,920,270, EP 0616161 B1, Broschüre Woeste'Yorkshire', Tectite Steckfittings, Erkrath, Frühjahr 2001 sowie Broschüre Kemper GmbH ,Olpe, -"Kemper-Click"- Januar 2002).

Die hier beschriebenen Rohrverbindungen sind als so genannte Steckfittings bekannt, bei denen das Leitungsrohr in den Fitting eingesteckt wird. Der Dichtring ist entweder im Fitting oder auf dem Leitungsrohr vormontiert, wobei die Abdichtung durch die Kompression des elastischen Dichtringes aus der Überdeckung zwischen Rohraußendurchmesser und Dichtringinnendurchmesser oder Fittinginnendurchmesser und Dichtringaußendurchmesser erzeugt wird.

Die axiale Sicherung wird bei diesen Rohrverbindungen durch einen auf dem Leitungsrohrumfang angeordnete Sicherungsring erreicht, der bei der Montage in eine entsprechende Ringnut im Fitting einrastet ("Kemper-Click"), oder durch einen im Fitting angeordneten Sicherungsring mit einer am Innenumfang zahnartigen Oberfläche, der sich beim Einschieben des Leitungsrohres mit der Mantelfläche des Leitungsrohres verkrallt (US 3,920,270 bzw. EP 0616161 B1).

Nachteilig bei den beschriebenen Steckfittingen ist, dass die Toleranzen der für die Verbindung maßgebenden Durchmesser von Leitungsrohr, Fitting und Dichtring großen Einfluss auf die Dichtheit, die axiale Sicherung sowie die Montierbarkeit der Verbindung haben.

Bei ungünstiger Paarung der Durchmessertoleranzen von Leitungsrohr, Fitting, Dichtring und Sicherungsring, kann eine zu geringe Kompression des Dichtringes zu Undichtigkeiten führen und die axiale Sicherung nicht ausreichend sein.

Andererseits müssen die Durchmessertoleranzen in einem Bereich liegen, in dem ein Einschieben des Leitungsrohres in den Fitting überhaupt möglich ist. Grundsätzlich besteht bei diesen Rohrverbindungen immer die Gefahr, dass Beschädigungen des Dichtringes beim Einführen des Leitungsrohres auftreten können.

Aufgabe der Erfindung ist es deshalb, eine Rohrverbindung der gattungsgemäßen Art anzugeben, die in einfacher und kostengünstiger Weise ohne zusätzliches Montagewerkzeug qualitätssicher hergestellt werden kann. Weiterhin soll sichergestellt werden, dass Beschädigungen des Dichtringes beim Einführen des Leitungsrohres vermieden werden.

Diese Aufgabe wird nach dem Oberbegriff in Verbindung mit den kennzeichnenden Merkmalen des Anspruchs 1 gelöst. Vorteilhafte Weiterbildungen sind Gegenstand von Unteransprüchen.

Nach der Lehre der Erfindung wird zur Lösung dieser Aufgabe ein Fitting verwendet, dessen einschubseitiges Ende ausgehend von einem das Leitungsrohr aufnehmenden zylindrischen Abschnitt aufgeweitet ist.

Das im aufgeweiteten Abschnitt angeordnete Dichtelement wird durch eine einen radial nach innen sich erstreckenden Kragen aufweisende und die Innenseite des Dichtelementes abdeckende Mitnahmehülse radial unter Kompression gehalten. Beim Einschieben des Leitungsrohres kommt der Kragen der Mitnahmehülse an der Stirnseite des Leitungsrohres zur Anlage und der Einschub in den zylindrischen Abschnitt erfolgt soweit bis die Mitnahmehülse das Dichtelement freigibt und durch die radiale Ausdehnung das Dichtelement abdichtend auf die Mantelfläche des Leitungsrohres drückt.

Die Erfindung ist nicht nur bei Verwendung eines Außenfittings anwendbar sondem analog auch für einen Innenfitting, auf den ein Leitungsrohr aufgeschoben wird.

Zur Verbesserung der axialen Sicherung ist an der Stirnseite des aufgeweiteten Abschnittes ein radial sich nach innen erstreckendes Sicherungselement befestigbar. Dieses weist einen in Einschubrichtung schräg liegenden Steg auf, der beim Einschieben des Leitungsrohres auf der Mantelfläche des Leftu ngsrohres unter leichter Vorspannung zur Anlage kommt.

Dieses Sicherungselement bildet eine Ausziehsicherung, wobei beim Versuch des Herausziehens des Leitungsrohres der Steg sich in die Mantelfläche des Leitungsrohres verkrallt.

Die Anordnung des Steges des Sicherungselementes kann je nach Ausführungsform verschieden sein. Eine Möglichkeit besteht darin, dass im Ausgangszustand der Steg auf der Mitnahmehülse aufliegt und einen Teil der Innenseite des Dichtelementes abdeckt. Die Erstreckung des Steges muss bei dieser Anordnung so gewählt werden, dass nach dem Wegschieben der Mitnahmehülse durch das Leitungsrohr der Steg etwas aufspringt und unter leichter Vorspannung auf der Mantelfläche des Leitungsrohres zur Anlage kommt.

Bei einer anderen Ausführungsform ist das Sicherungselement ohne Kontakt zur Mitnahmehülse angeordnet, wobei der Innendurchmesser des Steges etwas geringer ist als der kleinste zu erwartende Außendurchmesser des einzuschiebenden Leitungsrohres. Auf diese Weise ist sichergestellt, dass beim Einschieben des Leitungsrohres der Steg unter leichter Vorspannung auf der Mantelfläche des Leitungsrohres zur Anlage kommt.

Der Vorteil der erfindungsgemäßen Rohrverbindung ist darin zu sehen, dass die Rohrverbindung werkzeugfos hergestellt werden kann und unabhängig von den aktuellen Toleranzen von Leitungsrohr, Fitting oder Dichtring nunmehr allein über die Größe der radialen Komprimierung des Dichtelementes zwischen Fitting und Leitungsrohr eingestellt werden kann, wobei eine dichte und axial gesicherte Rohrverbindung hergestellt wird.

Vorteilhaft werden durch die Anordnung der Mitnahmehülse Beschädigungen des Dichtelementes beim Einschieben des Leitungsrohres vermieden, da ein Kontakt des Leitungsrohres mit dem Dichtelement beim Einschieben des Leitungsrohres in den Fitting nicht erfolgt. Die Mitnahmehülse selbst kann aus Metall oder Kunststoff bestehen.

Zur qualitätssicheren Herstellung der Rohrverbindung, weist der Fitting nach einem weiteren Merkmal vorteilhaft einen axialen Anschlag für das Leitungsrohr auf, bis zu dem das Leitungsrohr mitsamt der Mitnahmehülse in den Fitting hinein geschoben werden muss.

Erfindungsgemäß kann das aus Metall oder hartem Kunststoff bestehende Halteelement vorteilhaft lösbar mit dem Fitting verbunden sein, um die Montage des Dichtelementes zu erleichtern.

Über die Vorkomprimierung des elastischen Dichtelementes durch die Mitnahmehülse kann vorteilhaft die Dichtwirkung des Dichtelementes beeinflusst werden.

Nach einem weiteren vorteilhaften Merkmal kann die Verkrallung des Steges des Sicherungselementes mit dem Leitungsrohr über die Ausbildung einzelner Verkrallelemente des Steges oder über eine ringscheibenförmige Ausbildung des Steges erfolgen.

Weitere Merkmale, Vorteile und Einzelheiten der Erfindung ergeben sich aus der nachfolgenden Beschreibung.

Es zeigen:
- Figur 1: Ausschnittweise, im Längsschnitt dargestellte Rohrverbindung mit Außenfitting im vormontierten Zustand,
- Figur 2: wie Figur 1, im endmontierten Zustand,
- Figur 3: wie Figur 1, aber eine zweite Ausführungsform.

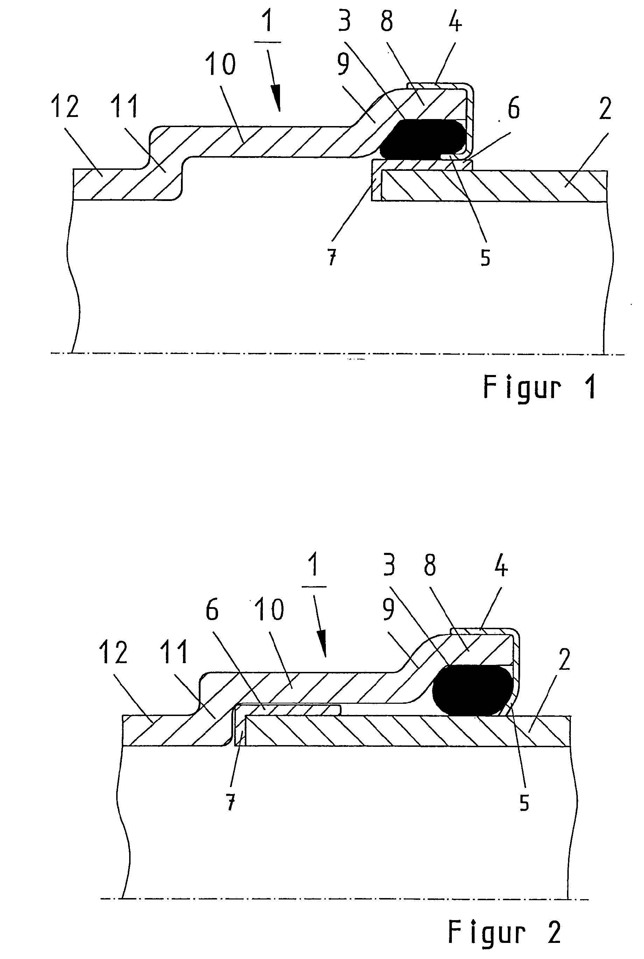

In Figur 1 ist eine erfindungsgemäße, ausschnittweise im Längsschnitt dargestellte Rohrverbindung mit Außenfitting im vormontierten Zustand dargestellt.

Der erfindungsgemäß ausgebildete Fitting 1 weist ausgehend von einem zylindrischen Abschnitt 10 einen aufgeweiteten Abschnitt 8 auf.

Das im aufgeweiteten Abschnitt 8 angeordnete Dichtelement 3 liegt in Einschubrichtung gesehen an einem Übergang 9 an, der gebildet wird durch den Durchmessersprung vom zylindrischen Abschnitt 10 zum aufgeweiteten Abschnitt 8. Somit ist das Dichtelement 3 gegen axiales Verschieben gesichert.

Am Innenumfang des Dichtelementes 3 ist eine Mitnahmehülse 6 angeordnet, die das Dichtelement 3 vorkomprimiert.

Im Stirnseitenbereich des Fittings 1 ist vorzugsweise lösbar ein radial nach innen sich erstreckendes Sicherungselement 4 angeordnet, das einen schräg in Einschubrichtung sich erstreckenden Steg 5 aufweist.

In diesem Ausführungsbeispiel liegt der Steg 5 auf der Mitnahmehülse 6 auf und erstreckt sich deshalb in horizontaler Richtung. Ein Teil der Innenseite des Dichtelementes 3 wird durch den umgebogenen Steg 5 abgedeckt.

Das Leitungsrohr 2 ist in den Einschubbereich des Fittings 1 eingeführt, wobei die Stimfläche des Leitungsrohres 2 an dem Kragen 7 der Mitnahmehülse 6 zur Anlage kommt. Vorteilhaft wird durch die Mitnahmehülse 6 ein Kontakt des Leitungsrohres 2 mit dem Dichtelement 3 beim Einschieben in den Fitting 1 vermieden.

Bei einer weiteren axialen Verschiebung des Leitungsrohres 2 in den Fitting 1, gemäß **figur 2**, wird mit dem Leitungsrohr 2 die Mitnahmehülse 6 soweit in den zylindrischen. Abschnitt 10 des Fiftings 1 verschoben, dass das sich radial ausdehnende Dichtelement 3 abdichtend an der Mantelfläche des Leitungsrohres 2 anliegt. Gleichzeitig wird durch das Wegschieben der Mitnahmehülse 6 auch der Steg 5 des Sicherungselementes 4 freigegeben, so dass dieser elastisch aufspringen kann und unter leichter Vorspannung auf der Mantelfläche des Leitungsrohres 2 zur Anlage kommt.

Im endmontierten Zustand ist das Leitungsrohr 2 soweit in den Fitting 1 eingeschoben, dass der Kragen 7 der Mitnahmehülse 6 an einem Axialanschlag 11 des Fittings 1 zur Anlage kommt. Wird nun versucht, das Leitungsrohr 2 wieder herauszuziehen, wirkt das Sicherungselement 4 wie eine Ausziehsicherung, weil der Steg 5 sich bei einer Rückwärtsbewegung des Leitungsrohres 2 in die Mantelfläche des Leitungsrohres 2 verkrallt.

Der Innendurchmesser des sich an den Axialanschlag 11 anschließenden zylindrischen Abschnittes 12 des Fittings 1 entspricht vorteilhaft dem Innendurchmesser des Leitungsrohres 2, so dass ein strömungsgünstiges Fluchten zwischen Fitting 1 und Leitungsrohr 2 gewährleistet ist.

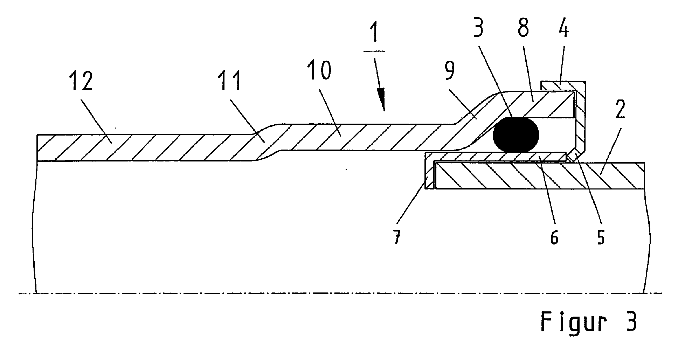

**Figur 3** zeigt eine zweite Ausführungsform, wobei für gleiche Teile gleiche Bezugszeichen verwendet worden sind. Im Unterschied zur Ausführungsform gemäß **Figur 1** hat im Ausgangszustand der Steg 5 des Sicherungselement 4 keinen Kontakt zur Mitnahmehülse 6. Damit die Ausziehsicherung wirksam werden kann, wird der Innendurchmesser des Steges 5. des Sicherungselementes 4 etwas geringer gewählt als der kleinste zu erwartende Außendurchmesser des einzuschiebenden Leitungsrohres 2. Damit ist sichergestellt, dass beim Einschieben des Leitungsrohres 2 der Steg 5 unter leichter Vorspannung auf der Mantelfläche des Leitungsrohres zur Anlage kommt. Das weitere Einschieben des Leitungsrohres 2 erfolgt in der gleichen Weise wie schon zuvor beschrieben.

| Bezugszeichenliste | |
|---|---|
| **Nr.** | **Bezeichnung** |
| 1 | Fitting |
| 2 | Leitungsrohr |
| 3 | Dichtelement |
| 4 | Sicherungselement |
| 5 | Steg |
| 6 | Mitnahmehülse |
| 7 | Kragen |
| 8 | aüfgeweiteter Abschnitt |
| 9 | Übergang |
| 10 | zylindrischer Abschnitt |
| 11 | Axialanschlag |
| 12 | zylindrischer Abschnitt |

## Patentansprüche

1. Rohrverbindung bestehend aus einem Fitting, der im Einschubbereich mit einem Dichtelement versehen ist und in den ein Leitungsrohr einschiebbar und ohne Verpresswerkzeug abdichtbar und axial sicherbar ist
**dadurch gekennzeichnet,**
**dass** das einschubseitige Ende des Fittings (1) ausgehend von einem das Leitungsrohr (2) aufnehmenden zylindrischen Abschnitt (10) aufgeweitet ist, und das im aufgeweiteten Abschnitt (8) angeordnete Dichtelement (3) durch eine einen radial nach innen sich erstreckenden Kragen (7) aufweisende und die Innenseite des Dichtelementes abdeckende Mitnahmehülse (6) radial unter Kompression gehalten wird und beim Einschieben des Leitungsrohres (2) der Kragen (7) der Mitnahmehülse (6) an der Stirnseite des Leitungsrohres (2) zur Anlage kommt und der Einschub in den zylindrischen Abschnitt (10) soweit erfolgt, bis die Mitnahmehülse (6) das Dichtelement (3) freigibt und durch die radiale Ausdehnung das Dichtelement (3) abdichtend auf die Mantelfläche des Leitungsrohres (2) drückt.

2. Rohrverbindung nach Anspruch 1
**dadurch gekennzeichnet,**
**dass** an der Stirnseite des aufgeweiteten Abschnittes (8) ein sich radial nach innen erstreckendes Sicherungselement (4) befestigbar ist, das einen in Einschubrichtung schräg liegenden Steg (5) aufweist, der beim Einschieben des Leitungsrohres (2) auf der Mantelfläche des Leitungsrohres (2) unter leichter Vorspannung zur Anlage kommt.

3. Rohrverbindung nach Anspruch 2
**dadurch gekennzeichnet,**
**dass** im Ausgangszustand der Steg (5) des Sicherungselementes (4) auf der Mitnahmehülse (6) aufliegt und einen Teil der Innenseite des Dichtelementes (3) abdeckt und die Erstreckung des Steges (5) so gewählt ist, dass nach dem Wegschieben der Mitnahmehülse (6) der Steg (5) unter leichter Vorspannung auf der Mantelfläche des Leitungsrohres (2) zur Anlage kommt.

4. Rohrverbindung nach Anspruch 2
**dadurch gekennzeichnet,**
**dass** im Ausgangszustand der Innendurchmesser des Steges (5) des Sicherungselementes (4) etwas geringer ist als der kleinste Außendurchmesser des einzuschiebenden Leitungsrohres (2).

5. Rohrverbindung nach den Ansprüchen 1 bis 4
**dadurch gekennzeichnet,**
**dass** das Sicherungselement (4) lösbar mit dem Fitting (1) verbunden ist.

6. Rohrverbindung nach den Ansprüchen 1 - 5
**dadurch gekennzeichnet,**
**dass** das Sicherungselement (4) aus Metall oder hartem Kunststoff besteht.

7. Rohrverbindung nach Anspruch 1
**dadurch gekennzeichnet,**
**dass** die Mitnahmehülse (6) aus Metall oder Kunststoff besteht.

8. Rohrverbindung nach Anspruch 1
**dadurch gekennzeichnet,**
**dass** im eingeschobenen Zustand der Kragen (7) der Mitnahmehülse (6) an einem Axialanschlag (11) zur Anlage kommt.

9. Rohrverbindung nach Anspruch 1
**dadurch gekennzeichnet,**
**dass** das Dichtelement (3) als elastischer Dichtring ausgebildet ist.
